# EUROPÄISCHE PATENTANMELDUNG

(11) **EP 4 424 476 A1**
(43) Veröffentlichungstag der Anmeldung: **04.09.2024**
(21) Anmeldenummer: 23159072.0
(22) Anmeldetag: 28.02.2023
(51) Int. Cl.: B25J 9/16, G05B 19/418

(54) **VERFAHREN ZUR OPTIMIERUNG DER STEUERUNG EINES GERÄTES MITTELS DER KOMBINATION VON EINEM LERNVERFAHREN UND MILP, COMPUTERPROGRAMM ZUR DURCHFÜHRUNG DES VERFAHRENS UND ENTSPRECHENDE VORRICHTUNG**

(71) Anmelder: Siemens Aktiengesellschaft, 80333 München (DE)
(72) Erfinder: Geipel, Markus Michael, 80799 München (DE); Moll, Christoph, 81549 München (DE); Pol, Sebastian, 90556 Seukendorf (DE); Thon, Ingo, 85630 Grasbrunn (DE)
(74) Vertreter: Siemens Patent Attorneys

(57) **Zusammenfassung**

Die Erfindung betrifft ein Verfahren zur Optimierung der Steuerung eines Gerätes mittels eines kombinierten Lernverfahrens und MILP. Es wird eine Kombination von diskreten Optimierungsalgorithmen und maschinellem Lernen vorgeschlagen, um schnelles maschinelles Lernen von Zuordnungsrichtlinien bereits während der Vorbereitungs- oder Trainingsphase zu erreichen sowie schnelle Reaktionszeiten für die Zuordnung im aktiven Betrieb der Anlage.

Die Lösung umfasst ein Verfahren zur Optimierung einer Bewegungssteuerung eines Gerätes, welches eine Bewegung basierend auf einer Ausgangssituation zur Durchführung einer Aufgabe ausführen soll. Unter Verwendung von maschinellem Lernen wird eine Fahrkurve errechnet, wobei die Trainingsdaten generiert werden, indem
- eine Vielzahl von Instanzen möglicher zufälliger Ausgangssituationen generiert werden,
- für jede generierte Instanz einer Ausgangssituation eine Fahrkurve und eine Bewegungssteuerung-Sequenz, zur Ermittlung eines optimierten Wegs des Geräts berechnet wird, und in einem nächsten Schritt die Bewegungssteuerung des Geräts mittels maschinellem Lernen unter Verwendung der generierten Trainingsdaten trainiert wird.

## Beschreibung

In Automatisierungsanlagen gibt es vielfältige Aufgaben, welche die Aufnahme und Bewegung von Objekten beinhalten. Fertigungsanlagen, darunter beispielsweise Verpackungsanlagen, in unterschiedlichsten Branchen der Industrieautomatisierung verwenden beispielsweise Förderbänder, auf denen sich Objekte, Produkte oder Teile von Produkten, in der Regel unsortiert oder unregelmäßig befinden. Beispiele finden sich in der Primär- und Sekundärverpackungsbranche, wie in der Nahrungs- und Genussmittelindustrie. Die Anzahl und die Anordnung der Produkte pro Förderfläche kann dabei stark variieren.

Unter einer Handhabungsmaschine, im Folgenden auch als Gerät bezeichnet, versteht man beispielsweise eine sogenannte Deltakinematik oder einen Roboter, wie er in der Automatisierung in Produktionsanlagen eingesetzt wird.

Für viele solcherart vorkommenden Vorgänge werden oftmals mehrere Handhabungsgeräte, wie Industrieroboter, auch Delta-Picker oder Knickarmroboter genannt, in Reihe verwendet, um ein "Pick and Place", also das Aufnehmen des Produkts vom Förderband und Neupositionieren (beispielsweise auf einem zweiten Förderband oder einem anderen Transportmedium) durchzuführen.

Das beschriebene Vorgehen ist nicht auf die genannten Beispiele beschränkt. Zu weiteren Anwendungen gehören neben den Pick-and-Place-Operationen das Verpacken, beispielsweise das Palettieren von Produkten, Bearbeiten und vieles anderes mehr.

Beim Betrieb einer Linie von (mehr oder weniger gleichartigen) Geräten stellt sich die Herausforderung zu entscheiden, welches Objekt von welcher Maschine kommissioniert, also aufgenommen und weitertransportiert und ggf. auch verarbeitet wird. In den meisten Konfigurationen kann jedes Produkt von jedem Gerät kommissioniert werden, was zu einem hohen Maß an Flexibilität für die Durchführung der Aufgaben führt. Bei der Auswahl kann beispielsweise eine Regel bestehen, dass ein Gerät nicht zwei nebeneinanderliegende Objekte aufnehmen, bzw. keine Objekte auf zu eng nebeneinanderliegenden Positionen abstellen kann. Mehrere Geräte müssen die Abarbeitung der Kommissionieraufgaben so verteilen.

Darüber hinaus werden (ggf. sich unterscheidende) Gerätelinien für unterschiedliche Aufgaben eingerichtet, die dann auch jeweils eigene Optimierungskriterien erfordern. Es kann Anwendungsfälle geben, wo es wichtig ist, dass alle Objekte erfolgreich kommissioniert werden (z. B. beim Herausfiltern von Kunststoffgegenständen aus einem Müllstrom). In anderen Anwendungsfällen ist es dagegen wichtiger, dass eine Verpackungseinheit vollständig gefüllt ist (z. B. das Befüllen einer Pralinenschachtel), während es weniger problematisch ist, wenn einige Objekte am Ende des Transportbandes nicht aufgenommen werden. Ein weiteres Szenario könnte sein, wenn es bei den aufzunehmenden Objekten verschiedene Objektklassen gibt, welche bei der Kommissionierung mit zu berücksichtigen sind. Ein Beispiel wäre es, Joghurtbecher in Paletten zu platzieren, so dass die Geschmacksrichtungen innerhalb einer Palette gleichmäßig gemischt werden.

Zusätzlich zu diesem Kompromiss zwischen Optimierungszielen besteht in der Regel das Problem, dass aktuelle Zuordnungsstrategien den gleichen Verschleiß der Kommissionierer nicht berücksichtigen. Wenn die Arbeitsbelastung nicht gleichmäßig verteilt wird, verschleißen die Kommissionierer unterschiedlich schnell, was zu häufigen und unregelmäßigen Wartungsintervallen, höheren Ausfallzeiten und letztendlich zu höheren Betriebskosten führt.

Während aktuelle Zuweisungsstrategien in den meisten Szenarien eine Kernaufgabe erfüllen können, berücksichtigen sie nicht die zuvor erwähnte Herausforderung des gleichmäßigen Verschleißes. Dies liegt daran, dass moderne Strategien die Koordination zwischen den verschiedenen Geräten nicht berücksichtigen. Stattdessen ist jedes Gerät in der Regel mit einer individuellen Richtlinie ausgestattet, die entscheidet, welche Objekte in seiner Arbeitszone kommissioniert werden. Gängige Strategien sind beispielsweise,
- immer das Objekt zu kommissionieren, das dem (Kommissionier- oder Greif-) Arm am nächsten befindet,
- das Objekt am weitesten vorne auf dem Förderband oder
- am weitesten hinten auf dem Förderband zu kommissionieren.

Diese individuellen Strategien führen jedoch zu dem Problem, dass die ersten Geräte einer Linie eine viel höhere Arbeitsbelastung aufweisen als diejenigen, die sich am Ende der Strecke befinden. Im Allgemeinen erlaubt keine der uns bekannten Methoden dem Anwender, verschiedene Optimierungskriterien abzuwägen.

Die Druckschrift EP3456485A1 beschreibt das Optimieren eines automatisierten Vorganges zum Auswählen und Greifen eines Objektes durch einen Roboter. Die Grundidee besteht darin, jedem Objekt einen Prioritätskenner zuzuweisen, welcher von dem Roboter beim Auswählen und Greifen des Objekts berücksichtigt wird.

Es ist Aufgabe der Erfindung, ein gegenüber dem Stand der Technik verbessertes Verfahren anzugeben. Es ist insbesondere Aufgabe der Erfindung, ein Verfahren anzugeben, welches es dem Anwender erlaubt, verschiedene Optimierungskriterien gegeneinander abzuwägen. Es ist weiterhin Aufgabe der Erfindung, ein Computerprogramm und eine entsprechende Vorrichtung anzugeben.

Die Aufgabe wird gelöst durch ein Verfahren mit den Merkmalen des Patentanspruch 1.

Die Aufgabe wird weiterhin gelöst durch ein Computerprogrammprodukt gemäß den Merkmalen des Patentanspruch 8.

Die Aufgabe wird außerdem durch eine Vorrichtung gelöst, welche die Merkmale des Patentanspruchs 9 aufweist.

Weitere Ausgestaltungen der Erfindung sind in den Unteransprüchen angegeben.

Vorgeschlagen wird nun eine Kombination von diskreten Optimierungsalgorithmen und maschinellem Lernen, um schnelles maschinelles Lernen von Zuordnungsrichtlinien bereits während der Vorbereitungs- oder Trainingsphase zu erreichen sowie schnelle Reaktionszeiten für die Zuordnung im aktiven Betrieb der Anlage.

Die Lösung umfasst ein Verfahren zur Optimierung einer Bewegungssteuerung eines Gerätes, welches eine Bewegung basierend auf einer Ausgangssituation zur Durchführung einer Aufgabe ausführen soll. Unter Verwendung von maschinellem Lernen wird eine Fahrkurve errechnet, wobei die Trainingsdaten generiert werden, indem
- eine Vielzahl von Instanzen möglicher zufälliger Ausgangssituationen generiert werden,
- für jede generierte Instanz einer Ausgangssituation eine Fahrkurve und eine Bewegungssteuerung-Sequenz, zur Ermittlung eines optimierten Wegs des Geräts berechnet wird, und in einem nächsten Schritt die Bewegungssteuerung des Geräts mittels maschinellem Lernen unter Verwendung der generierten Trainingsdaten trainiert wird.

Die Berechnung der Bewegungssteuerung-Sequenz kann in einer Ausführungsform mittels eines Solvers für Linear-Gemischt-Ganzzahlige-Optimierung, MILP durchgeführt wird. Optimierung im mathematischen Sinne bedeutet die Bestimmung des Maximums oder Minimums einer reellwertigen Funktion über einem (beschränkten) Bereich oder Zustandsraum und des Arguments, für das die Funktion diesen Extremwert annimmt. Ein Spezialfall hiervon ist die Linear-Gemischt-Ganzzahlige Optimierung (MILP; engl. für mixed integer linear programming). Diese wird zunehmend auch in den Gebieten Logistik, Transport, Produktionsplanung, Finanzen, Kommunikation und Design eingesetzt, auch deshalb, weil sich mit ihrer Hilfe und insbesondere durch die Verwendung von Binärvariablen Probleme der kombinatorischen Optimierung wie das Rundreiseproblem (travelling salesman problem), Maschinenbelegungsprobleme, Reihenfolgeprobleme (sequencing problems), Transport- und Zuordnungsprobleme formulieren lassen.

Es gibt leistungsfähige Computerprogramme (Solver), die solche mathematischen Probleme für MILP inzwischen schnell und in den meisten Fällen optimal lösen können.

In einer weiteren Ausgestaltungsform ist das maschinelle Lernen ein überwachtes Lernverfahren, insbesondere
- eine Support Vector Machine,
- ein Deep Neural Network,
- ein Feed Forwarding Neural Network, oder
- ein Recurrent Neural Network.

Die Methode richtet sich nach einer im Vorhinein festgelegten zu lernenden Ausgabe, deren Ergebnisse bekannt sind. Die Ergebnisse des Lernprozesses können mit den bekannten, richtigen Ergebnissen verglichen, also "überwacht", werden.

Die durchzuführende Aufgabe ist beispielsweise eine Pick and Place Aktion, dabei handelt es sich um einen der innerhalb von Fertigungsprozessen am häufigsten ausgeführten Arbeitsschritte. Pick and Place Aufgaben kommen in unterschiedlichen Abschnitten innerhalb einer Produktionskette vor. Ein oder mehrere Geräte sind dazu geeignet und eingerichtet, Objekte von einer Transportvorrichtung aufzunehmen, wobei für jedes Objekt Informationen zu einer Startposition und Informationen über mögliche Zielpositionen bekannt sind, und die Fahrkurve zumindest folgende Operationen beinhaltet:
- eine Aufnahmeaktion mit Anfahren einer Startposition des Objekts und
- eine Ablageaktion mit Anfahren einer Zielposition des Objekts.

Die Instanzen von möglichen zufälligen Ausgangssituationen werden völlig zufällig oder auch auf Basis von definierbaren Randbedingungen generiert.

Die definierbaren Randbedingungen umfassen in dem ausgeführten Beispiel:
- die Anzahl von aufzunehmenden Objekten von der Transportvorrichtung,
- die Anzahl der Geräte die die Objekte aufnehmen sollen (Pick),
- die Position der Geräte, beispielsweise verteilt entlang eines Förderbands,
- Art der Transportvorrichtung, beispielsweise eines oder mehrere Förderbänder, in verschiedenen Anordnungen zueinander, AGV (Automated Guided Vehicle), oder ähnliches.
- Die Geschwindigkeit der Transportvorrichtung, welche dann auch die Geschwindigkeit der aufzunehmenden Objekte direkt beeinflusst.
- Ein oder mehrere weitere Optimierungsziele.

Weitere Optimierungsziele können zumindest eines der folgenden umfasst:
- Minimalisierung der Fahrkurve des Geräts vom Start der Aktion (also beispielsweise unter Berücksichtigung des erreichbaren Radiusses des Geräts) bis zum Ende einer Aktion, welche die Aufnahme und Ablage eines oder mehrerer Objekte umfasst.
- Bei einer Situation mit mehreren Geräten, eine gleichmäßige Auslastung dieser Geräte.
- Die Maximierung der Aufnahmequote der Objekte, also das Sicherstellen, dass am Ende eines Transportbandes keine Objekte mehr nicht aufgenommen und kommissioniert sind und daher vom Transportband beispielsweise in eine Auffangvorrichtung fallen.
- Die Maximierung der Ablagequote auf Zielpositionen, also das Sicherstellen dass am Ende auf jeder zu besetzenden Position auch ein (das richtige) Objekt abgelegt wurde (Beispiel: Pralinen in einer Schachtel, Chips auf einer Halbleiter-Platine, ...)
- Der Verschleiß der Geräte, der aus in der Fahrkurve enthaltenen Bewegungswechseln und zurückgelegter Strecke ermittelt wird.

Ausführungsbeispiele sind in den Figuren wiedergegeben. Dabei zeigt
- Figur 1: eine Schematische Übersicht des Verfahrens,
- Figur 2: die Teillösung mit maschinellem Lernen,
- Figur 3: die Teillösung mit diskreter Optimierung,
- Figur 4: eine Architekturübersicht mit Geräten, Objekten und Transportvorrichtungen und
- Figur 5: eine Detailsicht
- Figur 6: eine Detailsicht

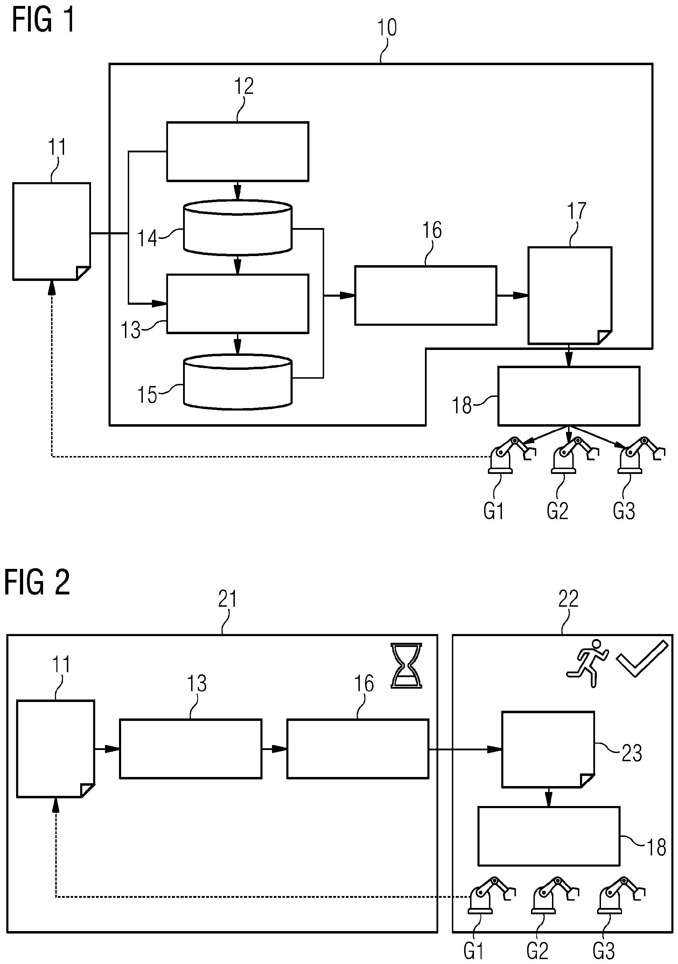

Die Figur 1 beschreibt die Methode in der Übersicht.

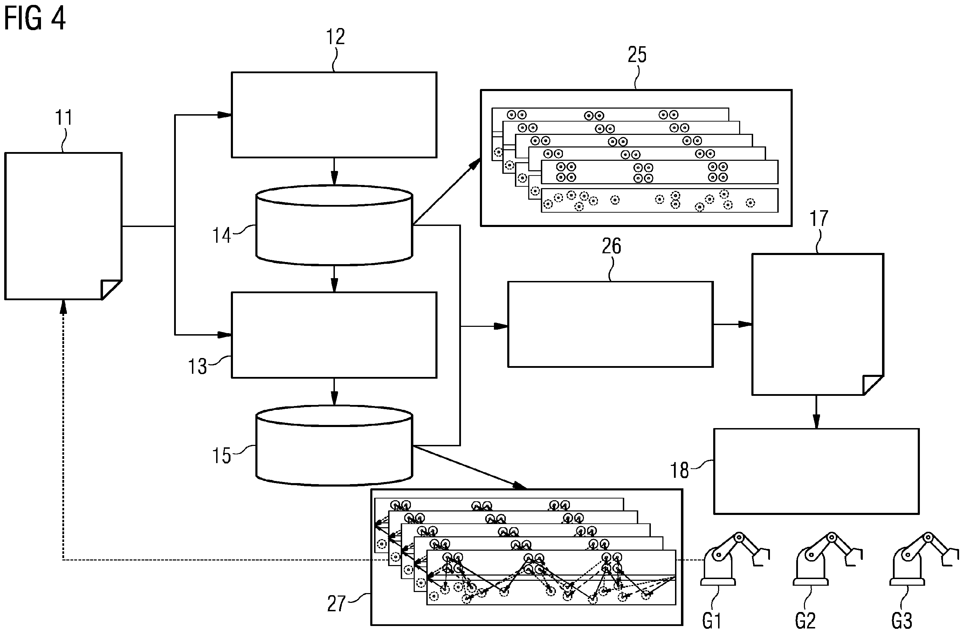

Ausgangspunkt ist beispielsweise eine Pick and Place Anwendung in der industriellen Fertigung, wie sie in Figur 4 näher erläutert wird.

Das Zuweisungsproblem 11 wird basierend beispielsweise auf der Einrichtung einer Kommissionierlinie, d. h. mehrere Geräte G1, G2, G3, die in Reihe an einer Transportvorrichtung wie einem Förderband aufgestellt sind, formal beschrieben.

Andere Aufgabenstellungen sind aber auch denkbar, die Optimierung der Bahnen und Werzeugwechsel in Werkzeugmaschinen oder die Optimierung von Bearbeitungsschritten in CNC-Machinen.

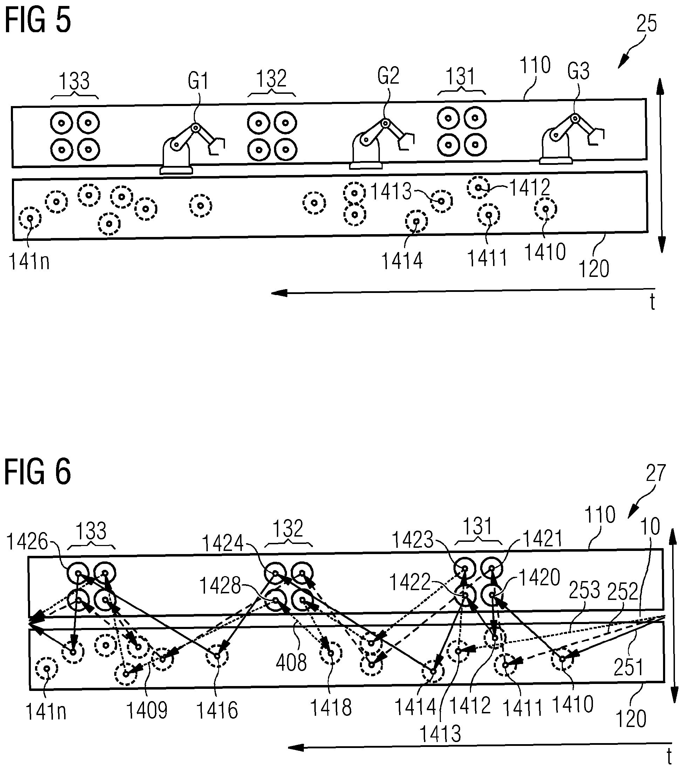

Eine detailliertere Darstellung einer beispielhaften Ausgangssituation ist weiter unten der Figur 5 und der zugehörigen Beschreibung zu entnehmen.

Basierend auf der Problembeschreibung 11 erstellt ein Problem-Instanz-Generator 12 einen Datensatz mit möglichen Probleminstanzen, 14. Dies kann in dem zu Grunde liegenden Beispiel etwa durch zufälliges Generieren von Objektsequenzen für die Kommissionierer (also das Gerät, das zur Aufnahme dieser Objekte eingerichtet ist) erfolgen, oder auch fest vorgegeben sein. Zufällige Merkmale können dabei beispielsweise die Position, Größe, Form oder Anzahl der Objekte sein.

Weitere Aspekte des zu lösenden Problems können anhand der Variablen in der Problemdefinition variiert werden:
- die Anzahl der Geräte,
- die Position des oder der Geräte,
- die Reichweite des oder der Geräte,
- Aspekte der Transporteinrichtungen (z. B. bei Förderbändern die Ausrichtung, Breite oder Geschwindigkeit oder bei AGV der Aktionsradius und die maximale Geschwindigkeit) und
die Zielpositionen der Objekte, welche aufzunehmen sind. Hier sind auch Einschränkungen in Bezug auf mögliche Zuweisungen denkbar, oder weitere Bedingungen, wie das Zählen von Objekten einzelner Klassen ("grünes Objekt", "eckiges Objekt", "Objekt mit Gewicht = 500g") welche dann auch in Zielgruppen ("Box") gebündelt werden können (beispielsweise lauter gleiche Objekte, oder nur genau ein Objekt von jedem Typ), dies kann durch eine Erweiterung einer Instanzbeschreibung und des Modells um Konzepte wie Objektklassen und Zielgruppen vorteilhaft ermöglicht werden.

Ein diskreter Optimierer 13 (auch MIP Solver) wird verwendet, um die zuvor erstellten Probleminstanzen zu lösen. Dies bedeutet, dass für jede Instanz die beste Auswahlzuordnung berechnet wird, 15. Da diese Optimierung offline und nicht im Regelkreis der Kommissionierlinie erfolgt, muss der Optimierer nicht in Echtzeit laufen, sondern kann deutlich mehr Rechenzeit aufwenden, um bessere oder sogar global optimale Lösungen zu finden.

Sowohl bei Probleminstanzen als auch bei den Lösungen existiert effektiv ein beschrifteter Datensatz, auf den überwachte maschinelle Lernalgorithmen angewendet werden können (Support Vector Machines, Deep Neural Networks oder vergleichbares), um eine Abbildung aus der Instanz (Situation der Auswahlzeile) auf die Lösung (entsprechende beste Auswahlzuordnung) zu lernen.

Der Datensatz verzeichnet alle entscheidungsrelevanten Faktoren wie Lage von Objekten, Bandgeschwindigkeiten, Randbedingungen der Kommissionierung, etc. Die Beschriftung (Labels) bestehen in den optimalen Entscheidungen, die durch den diskreten Optimierer in dieser Situation vorgeschlagen wurden.

Diese Abbildung kann nun als Richtlinie verwendet werden, die auf dem Geräte-Controller (oder in der Nähe des Geräte-Controllers in der Live-Regelschleife) ausgeführt wird. Dies ist möglich, da die Auswertung des maschinellen Lernmodells viel schneller ist als die Lösung des zugrunde liegenden diskreten Optimierungsproblems.

Figur 2 zeigt den vereinfacht dargestellten zweistufigen Ansatz, zunächst eine große Anzahl von Auswahlzuweisungsproblemen offline zu lösen und diese Lösungen im zweiten Schritt als beschriftete Daten zu verwenden, um ein maschinelles Lernmodell zu trainieren, das dann in den Regelkreis integriert wird. Gleiche Bezugszeichen verweisen auf gleiche Objekte.

Das Problem wird zunächst definiert, 11, und kann durch diskrete Optimierung gelöst werden, 13. Die ganzzahlige lineare Optimierung (auch ganzzahlige Optimierung) ist ein Teilgebiet der angewandten Mathematik. Sie beschäftigt sich mit der Optimierung linearer Zielfunktionen über einer Menge, die durch lineare Gleichungen und Ungleichungen eingeschränkt ist. Dabei ist mindestens eine Variable diskret, also nicht kontinuierlich. Die diskrete Optimierung ist jedoch rechenintensiv und kann daher in einem komplexeren Setup mit einer hohen Aufnahmerate möglicherweise nicht schnell genug ausgeführt werden. Daher schlagen wir vor, anstelle dieser zeitaufwendigen Optimierungsberechnung, die Berechnungsergebnisse durch einen Schätzer zu approximieren und diesen Schätzer mit vorberechnete Optimierungsergebnissen zu trainieren.

Offline 21 werden bei dieser Vorgehensweise die Schritte
- Problem Definition 11,
- Diskrete Optimierung 13 und
- die Lernphase des Machine Learning Verfahrens 16 ausgeführt. Diese Schritte geschehen vor dem Einsatz im Produktivsystem und sind daher nicht zeitkritisch, was durch das Sanduhrsymbol dargestellt ist.

Es wird eine fertige Steuerungssequenz ausgegeben (Optimized Control Policy), 23 an den Controller 18, welcher die Geräte G1, G2, G3 steuert.

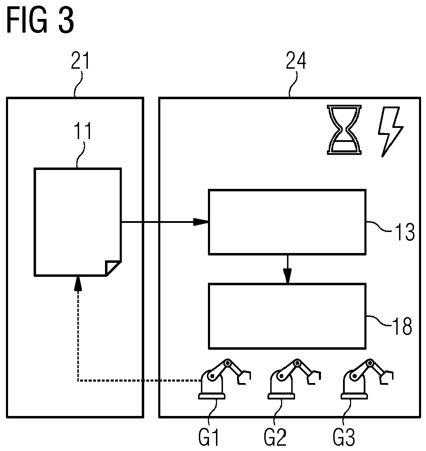

Figur 3 zeigt eine Alternative aus dem Stand der Technik, die ohne maschinelles Lernen auskommt. Auch hier geschieht die Definition des Problems 11 bereits vorab offline, 21. Ausgehend von der vorgefundenen Situation wird dann mit Hilfe des bereits oben beschriebenen diskrete Optimierung MILP, 13 gelöst werden, 24. Da im industriellen Umfeld häufig eine rasche Reaktion auf eine vorgefundene Situation erfolgen muss ("Echtzeit"), ist ein solches Verfahren in der Praxis zu langsam und nicht anwendbar.

In den letzten Jahren werden vermehrt maschinelle Lernansätze wie verstärkendes Lernen angewendet, um auch Problemstellungen im industriellen Umfeld zu lösen. Verstärkendes Lernen (englisch Reinforcement Learning, RL) steht für eine Reihe von Methoden des maschinellen Lernens, bei denen ein Agent selbstständig eine Strategie (englisch policy) erlernt, um erhaltene Belohnungen zu maximieren. Dabei wird dem Agenten nicht gezeigt, welche Aktion in welcher Situation die beste ist, sondern er führt eine Aktion aus und erhält durch die Interaktion mit seiner Umwelt zu bestimmten Zeitpunkten eine Belohnung, die anzeigt, wie gut die durchgeführte Aktion das gestellte Problem löst. Die Belohnung kann dabei also auch negativ sein. So werden am Ende die vorteilhaften Handlungen verstärkt.

Eine auf verstärkendem Lernen basierende Lösung weist den Vorteil auf, dass die so trainierte Lösung nach dem Training schnell läuft. Allerdings kann das notwendige Training für komplexere Setups sehr zeitaufwendig sein. Und ein geändertes Setup erfordert ein neues, angepasstes Training.

In der vorgeschlagenen Lösung wird daher auf eine andere Art des maschinellen Lernens zurückgegriffen, das sogenannte überwachte Lernen (supervised learning).

Überwachtes Lernen ist ein Teilgebiet des maschinellen Lernens. Mit Lernen ist dabei die Fähigkeit einer künstlichen Intelligenz gemeint, Gesetzmäßigkeiten nachzubilden. Die Ergebnisse sind durch Naturgesetze oder Expertenwissen bekannt und werden benutzt, um das System anzulernen. Die Methode richtet sich nach einer im Vorhinein festgelegten zu lernenden Ausgabe, deren Ergebnisse bekannt sind. Die Ergebnisse des Lernprozesses können mit den bekannten, richtigen Ergebnissen verglichen, also "überwacht", werden. Dem Fachmann steht eine breite Palette von überwachten Lernalgorithmen zur Verfügung, von denen jeder seine Stärken und Schwächen hat.

Zum Training können Paare von (Problem, Lösung) Instanzen verwendet werden, um den Maschinlern-Algorithmus zu trainieren:
Probleme könnten dabei beispielsweise so formalisiert sein:
- Eine Liste von Startpositionen (1410, 1411, 1412, ...)
- Eine Liste von Zielpositionen (1420, 1421, 1422, ...)
- Eine Liste von Geräten (G1, G2, G3), mit ihrer Konfiguration (Position, Radius, Geschwindigkeit, Beschleunigung, etc.)

Lösungen könnten dabei beispielsweise so formalisiert sein: Eine Liste von Positionen (Start und Ziel, Pick & Place) bei der jede Position kommentiert (gelabelt?) ist mit der Vorgänger- und dem Nachfolgerposition auf dem Fahrtweg (die Position wo Aufgenommen bzw. abgelegt wird) und einem Offset (also ggf. ein Zeitverzug) sowie das Gerät, welches für die Aktion an der Position ausgewählt wurde. Die Labels geben die optimale Handlung in dieser Situation vor.

Verwendet werden kann ein beliebiger Algorithmus für überwachtes Lernen, beispielsweise Neuronale Netze oder Convolutional Networks.

Figur 5 zeigt detaillierter die Ausschnitte 25 und 27 der Figur 4, die Aufsichten auf ein Arrangement von zwei parallel angeordneten Förderbändern 110, 120, welche gleiche Laufrichtung haben. Diese Anordnung wurde lediglich zur Veranschaulichung des Verfahrens gewählt, andere Anordnung der Laufbänder, beispielsweise orthogonal, sind möglich, aber in den Figuren nicht dargestellt.

Die Geräte G1, G2 und G3 sind entlang des Förderbandes angeordnet. In der unteren Darstellung von Figur 5 sind diese, aus Gründen der Übersichtlichkeit, in der Darstellung weggelassen.

Gleiche Bezugszeichen bezeichnen jeweils gleiche Gegenstände.

Auf dem unteren Förderband, 12, befinden sich jeweils die aufzunehmenden Objekte, 1410, 1411, ..., 2410, 2411, ... und auf dem oberen Förderband 11, die Zielpositionen 2420, 2021, zu denen die Objekte transportiert und dort abgelegt werden sollen. In dem dargestellten Beispiel handelt es sich dabei weiterhin um Gruppierungen von Zielpositionen, also beispielsweise eine Schachtel, einen Karton, eine Palette, einen Blister oder ähnliches, 131, 132,..., zur Aufnahme von mehreren Objekten, was für die Bestimmung der Steuerung ggf. weitere Rahmenbedingungen vorgibt.

Die in Figur 4 oben dargestellten Informationen 25 stellen die Startinformationen für das Verfahren dar: welche Startpositionen die einzelnen Objekte aufweisen, beispielsweise mit Koordinateninformationen (x, y) und welche Zielposition (x`, y`). Die Geräte G1, G2, G3 sind an dem Transportband geeignet angeordnet, die Laufrichtung der Transportvorrichtungen ist mit dem Pfeil t dargestellt.

Figur 5 unten, 27, nun zeigt das Ergebnis einer Berechnung mit dem vorgeschlagenen Verfahren auf Basis der Daten 25. Es ist jeweils die Zuordnung der Geräte G1, G2, G3 (nicht dargestellt) zu den Objekten und die Fahrspuren der drei Geräte, 251. 252 und 253 angezeichnet. Das Objekt 1410 ist im dargestellten Beispiel der Zielposition 1420 zugewiesen. Dabei wird zunächst eine Leerfahrt von der Ausgangsposition zu dem Objekt 1410 geplant und durchgeführt, daran anschließend eine Aufnahme des Objekts 2410, dann eine Ladefahrt (mit dem Objekt 1410) zur ermittelten Zielposition 1420. In dem aufgezeichneten Beispiel werden alle Zielplätze am Ende mit Objekten belegt, was man daran sieht, dass bei jeder Zielposition eine der drei Fahrkurven 251, 252 oder 253 verzeichnet ist. Es kann vorkommen, dass nicht alle Objekte 1417 von der ersten Transportvorrichtung aufgenommen und kommissioniert werden.

## Patentansprüche

1. Computerimplementiertes Verfahren zur Optimierung einer Bewegungssteuerung eines Gerätes (G1, G2, G3), wobei basierend auf einer Ausgangssituation zur Durchführung einer Aufgabe, eine optimale Fahrkurve (251, 252, 253) für das Gerät (G1, G2, G3) errechnet wird,
wobei die Trainingsdaten generiert (12) werden, indem
- eine Vielzahl von Instanzen (25) möglicher zufälliger Ausgangssituationen generiert (12) werden,
- für jede generierte Instanz (25) einer Ausgangssituation ein Fahrkurve (251, 252, 253) und eine Bewegungssteuerung-Sequenz, zur Ermittlung eines optimierten Wegs des Geräts (251, 252, 253) berechnet wird, und
in einem nächsten Schritt die Bewegungssteuerung des Geräts mittels maschinellem Lernen unter Verwendung der so generierten Trainingsdaten (17) erfolgt.

2. Verfahren gemäß Patentanspruch 1,
**dadurch gekennzeichnet, dass**
die Berechnung der Bewegungssteuerung-Sequenz mittels eines Solvers für Linear-Gemischt-Ganzzahlige-Optimierung, MILP durchgeführt wird.

3. Verfahren gemäß eines der vorherigen Patentansprüche,
**dadurch gekennzeichnet, dass**
das maschinelle Lernen ein überwachtes Lernverfahren ist, insbesondere
- eine Support Vector Machine,
- ein Deep Neural Network,
- ein Feed Forwarding Neural Network, oder
- ein Recurrent Neural Network.

4. Verfahren gemäß eines der vorherigen Patentansprüche,
**dadurch gekennzeichnet, dass**
die durchzuführende Aufgabe ein Pick&Place Aktion ist und das Gerät (G1, G2, G3) dazu geeignet und eingerichtet ist, Objekte von einer Transportvorrichtung (110) aufzunehmen,
- wobei für jedes Objekt Informationen zu einer Startposition (1410, 1411, ...) und Informationen über mögliche Zielpositionen (2420, 2421, ...) bekannt sind, und
die Fahrkurve (251, 252, 253) zumindest folgende Operationen beinhaltet:
- eine Aufnahmeaktion mit Anfahren einer Startposition (1410) des Objekts und
- eine Ablageaktion mit Anfahren einer Zielposition (1420) des Objekts.

5. Verfahren gemäß eines der vorherigen Patentansprüche,
**dadurch gekennzeichnet, dass**
die Instanzen (25) möglicher zufälliger Ausgangssituationen generiert (12) werden auf Basis von definierbarer Randbedingungen.

6. Verfahren gemäß Patentanspruch 5,
**dadurch gekennzeichnet, dass**
die definierbaren Randbedingungen umfassen können:
- Anzahl Objekte
- Anzahl Geräte (G1, G2, G3),
- Position Geräte (G1, G2, G3),
- Art der Transportvorrichtung (110),
- Geschwindigkeit der Transportvorrichtung (110),
- weiteres Optimierungsziel.

7. Verfahren gemäß Patentanspruch 7,
**dadurch gekennzeichnet, dass**
das weitere Optimierungsziel zumindest eines der folgenden umfasst:
- Minimalisierung der Fahrkurve (251, 252, 253),
- Gleichmäßige Auslastung zumindest zweier Geräte (G1, G2, G3),
- Maximierung der Aufnahmequote der Objekte,
- Maximierung der Ablagequote auf Zielpositionen (1420)
- Verschleiß der Geräte (G1, G2, G3), ermittelt aus in der Fahrkurve (251, 252, 253) enthaltenen Bewegungswechseln und zurückgelegter Strecke.

8. Computerprogrammprodukt geeignet zur Durchführung eines Verfahrens gemäß den Merkmalen eines der Patentansprüche 1 bis 7.

9. Vorrichtung (10) zur Optimierung einer Bewegungssteuerung eines Gerätes (G1, G2, G3), wobei eine Fahrkurve (251, 252, 253) basierend auf einer Ausgangssituation zur Durchführung einer Aufgabe, unter Verwendung von maschinellem Lernen mit generierten Trainingsdaten, errechnet wird,
- mit einem Problem-Instanz-Generator (12), der eine Vielzahl von Instanzen (14) möglicher zufälliger Ausgangssituationen generiert (25), und
- mit einem Optimierer (13), der für jede generierte Instanz (25) einer Ausgangssituation ein Fahrkurve (251, 252, 253) und eine Bewegungssteuerung-Sequenz, zur Ermittlung eines optimierten Wegs des Geräts (251, 252, 253) berechnet, und
- mit einer Maschinen-Lern-Einheit (16), die die Bewegungssteuerung des Geräts mittels Verwendung der generierten Trainingsdaten trainiert, um eine optimale Zuordnungsstrategie (17) für das Gerät (G1, G2, G3) zu ermitteln.

10. Vorrichtung gemäß Patentanspruch 9,
**dadurch gekennzeichnet, dass**
der Optimierer (13) der Bewegungssteuerung-Sequenz ein Solvers für Linear-Gemischt-Ganzzahlige-Optimierung, MILP ist.

11. Vorrichtung gemäß Patentanspruch 9 oder 10,
**dadurch gekennzeichnet, dass**
die Maschinen-Lern-Einheit (16) insbesondere eine der folgenden Ausprägungen umfasst:
- eine Support Vector Machine,
- ein Deep Neural Network,
- ein Feed Forwarding Neural Network, oder
- ein Recurrent Neural Network.

12. Vorrichtung gemäß einem der Patentansprüche 9 bis 11,
**dadurch gekennzeichnet, dass**
die durchzuführende Aufgabe ein Pick&Place Aktion ist und das Gerät (G1, G2, G3) dazu geeignet und eingerichtet ist, Objekte von einer Transportvorrichtung (110) aufzunehmen,
- wobei für jedes Objekt Informationen zu einer Startposition (1410, 1411, ...) und Informationen über mögliche Zielpositionen (2420, 2421, ...) bekannt sind, und
die Fahrkurve (251, 252, 253) zumindest folgende Operationen beinhaltet:
- eine Aufnahmeaktion mit Anfahren einer Startposition (1410) des Objekts und
- eine Ablageaktion mit Anfahren einer Zielposition (1420) des Objekts.

13. Vorrichtung gemäß einem der Patentansprüche 9 bis 12,
**dadurch gekennzeichnet, dass**
der Problem-Instanz-Generator (12), die Instanzen (25) möglicher zufälliger Ausgangssituationen generiert (12) auf Basis von definierbarer Randbedingungen.

14. Vorrichtung gemäß Patentanspruch 13,
**dadurch gekennzeichnet, dass**
die definierbaren Randbedingungen umfassen können:
- Anzahl Objekte
- Anzahl Geräte (G1, G2, G3),
- Position Geräte (G1, G2, G3),
- Art der Transportvorrichtung (110),
- Geschwindigkeit der Transportvorrichtung (110),
- weiteres Optimierungsziel.

15. Vorrichtung gemäß einem der Patentansprüche 9 bis 14,
**dadurch gekennzeichnet, dass**
das weitere Optimierungsziel zumindest eines der folgenden umfasst:
- Minimalisierung der Fahrkurve (251, 252, 253),
- Gleichmäßige Auslastung zumindest zweier Geräte (G1, G2, G3),
- Maximierung der Aufnahmequote der Objekte,
- Maximierung der Ablagequote auf Zielpositionen (1420)
- Verschleiß der Geräte (G1, G2, G3), ermittelt aus in der Fahrkurve (251, 252, 253) enthaltenen Bewegungswechseln und zurückgelegter Strecke.
